# EUROPEAN PATENT SPECIFICATION

(11) **EP 0 450 342 B1**
(45) Date of publication and mention of the grant of the patent: **11.10.1995**
(21) Application number: 91103605.1
(22) Date of filing: 08.03.1991
(51) Int. Cl.: C08L 23/12, C08J 9/16

(54) **Crosslinked polypropylene compositions suitable for the manufacture of foamed articles**
Vernetzte Polypropylen-Zusammensetzung geeignet zur Herstellung von Schaumgegenständen
Compositions de polypropylène réticulé utile pour la préparation d'articles expansés

(30) Priority: 09.03.1990 IT 4100490
(43) Date of publication of application: 09.10.1991
(73) Proprietor: SPHERILENE S.r.l., I-20121 Milano (IT)
(72) Inventor: Braga, Vittorio, I-44100 Ferrara (IT); Ghisellini, Renato, I-44028 Poggio Renatico, Ferrara (IT)
(74) Representative: Weinhold, Peter, Dr.

(56) References cited:
- EP-A- 0 073 435
- US-A- 3 301 837
- CHEMICAL ABSTRACTS, vol. 99, no. 37, 1983, Columbus, Ohio, US; abstract no. 159324Z, BORSIG, E ET. AL.: 'polypropylene crosslinking' page 31 ;column 1 ;

## Description

The present invention relates to compositions consisting of or comprising an intimate mixture of crosslinked polypropylene and of not crosslinked polypropylene, suitable for the manufacture of foamed articles.

Compositions and manufactured articles comprising crosslinked polypropylene and not crosslinked polypropylene, obtained by the crosslinking of polypropylene with organic peroxides and crosslinking co-agents having double or triple bonds, optionally in the presence of foaming agents, are known from EP-A-73435.

According to said document the preformed manufactured article to be crosslinked is treated, at the crosslinking temperature, in an autoclave containing an aqueous solution of the peroxide and of the co-agent. Alternatively, the manufactured article, obtained by the extrusion, at 160 to 180°C, of a mixture comprising polypropylene, the peroxide and the co-agent, is separately crosslinked at 180 to 230°C and atmospheric, reduced or superatmospheric pressure.

These compositions show a poor homogeneity and can be processed only with difficulty. Moreover, the foamed articles obtained therefrom do not have the flexibility required for many applications.

There have now been found polypropylene compositions which are endowed with highly satisfactory processing characteristics and a high homogeneity which makes them suitable for the manufacture of foamed materials having extraordinarily small and regular cells. These compositions, which are one of the objects of the present invention, comprise an intimate blend of from 3 to 75% by weight of crosslinked polypropylene and from 97 to 25% by weight of not crosslinked polypropylene, wherein:
a) the intrinsic viscosity (η) at 135°C in tetrahydronaphthalene of the not crosslinked polypropylene ranges from 0.5 to 1.3 dl/g, preferably from 0.6 to 1.3 and most preferably from 0.9 to 1.0 dl/g;
b) the melt index (at 230°C and 2.16 kg) ranges from 610 to 0.001 kg/10', preferably from 80 to 0.01 kg/10';
c) the crosslinked polypropylene is present as dispersed phase in the not crosslinked polypropylene (matrix) in the form of gels showing approximately spheric particles having sizes of from 0.5 to 100 µm, preferably 0.5 to 10 µm and more preferably 0.5 to 5 µm.

The term "crosslinked polypropylene" is meant to denote polypropylene which is insoluble in xylene at 135°C. Accordingly the term "not crosslinked polypropylene" means polypropylene soluble in xylene at the above temperature.

Preferably, the above compositions comprise from 7 to 40% by weight of crosslinked polypropylene and from 93 to 60% by weight of not crosslinked polypropylene.

The compositions of the present invention may be obtained by subjecting a mixture comprising:
a) a homopolymer or a copolymer of propylene with other copolymerizable olefinic monomers in amounts up to 10% by weight, preferably isotactic polypropylene,
b) a crosslinking agent for the polypropylene of the peroxidic type;
c) from 5 to 500%, preferably from 7 to 150% by weight, calculated on the peroxidic agent, of a compound (co-agent) of one of the following general formulae: 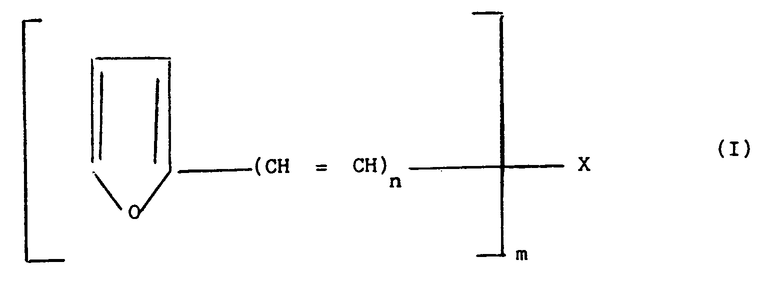 wherein X is selected from CHO, COOH, CONH₂, CN, NO₂, -COOCO-, COOR, -CO-, CH₂COCH₂COOR and -CH(COOR)₂ radicals wherein R is a C₆-C₈ aryl (e.g. phenyl), or a C₁-C₄ alkyl (e.g. methyl or ethyl) group;
   n = 1 or 2; and
   m = an integer corresponding to the free valence of X; 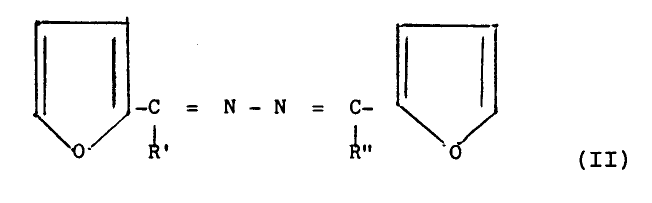 wherein R' and R'', the same or different from each other, are selected from hydrogen, C₁-C₄ alkyl radicals (e.g. CH₃ and C₂H₅) and C₅-C₈, preferably C₆-C₈ cycloalkyl groups,
to mastication or to the action of other shear forces, at a temperature sufficient to melt the polypropylene and at which the crosslinking of the polypropylene can occur.

Preferred examples of furane derivatives of formulae (I) and (II) which can be used in the present invention are 1,5-difurfuryl-1,4-pentadiene-3-one and difurfuraldazine.

Other suitable examples are, e.g., the furane compounds described in US-A-3,301,837, some examples of which are: β-(alpha-furyl)acrolein; 5-(alpha-furyl)-pentadienal; β-(alpha-furyl)-acrylamide; β-(alpha-furyl)acrylonitrile; β-(alpha-furyl)acrylic acid and esters thereof; bis-furfurylideneacetone; β-(alpha-furyl)ethyl-β-(alpha)acrolein; esters of furfurylidenemalonic acid; condensation products of β-(alpha-furylacrolein) with cyclic ketones, as described in Chem. Berichte 76, 676 (1943).

The above compounds are known in the art and can be prepared, e.g., according to the process of US-A-3,301,827.

The polypropylene may be a homopolymer or a copolymer of propylene with other copolymerizable olefinic monomers such as, for instance, ethylene, butene-1, butadiene, preferably in quantities up to 10% by weight and generally in amounts of from 0.5 to 10% by weight of the copolymer. The corresponding copolymers may be either of the block type (heterophasic) or of the random type.

The peroxidic crosslinking agent is an organic peroxide, preferably selected from those showing a half-life of the order of from 10 to 400 seconds at the crosslinking temperatures. This temperature preferably ranges from 150 to 240°C.

Examples of peroxides which can be used are: dicumylperoxide; alpha, alpha'-bis(t.butylperoxy)-m-, and/or p-diisopropylbenzene (TBPDB); 1,1-di(t.butylperoxy)-3,5,5-trimethylcyclohexane; 2,5-dimethyl-2,5-di(t.butylperoxy)hexane.

The employed amounts of the crosslinking agent and of the co-agent depend on the desired percentage of crosslinked polypropylene in the final composition. These quantities may easily be calculated according to criteria well known to those skilled in the art, based on the activity and functionality of both the crosslinking agent and the co-agent used. For the purposes of the present invention, said amounts will generally range from 0.1 to 5% by weight of the polypropylene weight.

The process for the preparation of the compositions of the present invention generally comprises the preparation of an intimate mixture of the above components (a) to (c) and the subsequent heating thereof during the mixing or the mastication step or under the action of other shear forces, at a temperature which is at least equal to the melting temperature of the polypropylene and at which the crosslinking of polypropylene can take place.

The duration or the end of the crosslinking under these conditions is dependent on the quantity of the crosslinking agent used, calculated in a manner such as to obtain a composition containing from 3 to 75% by weight of crosslinked polypropylene, based on the total polypropylene.

Generally, the crosslinking temperature is kept, as mentioned above, at from 150 to 240°C, preferably from 180 to 240°C.

The crosslinking is complete when the crosslinking agent is no longer present in the composition.

Mineral fillers, organic and/or inorganic pigments, stabilizers and additives which are generally used in olefinic and non-olefinic polymers, as well as quantities of up to 10% by weight of EPM rubbers can also be present in the preparation of the compositions of the present invention, together with components (a) to (c).

The preparation of the starting mix of components (a) to (c) and the optional additives, as well as the crosslinking of the mix itself may be performed in suitable apparatus such as, for instance,a Banbury mixer or a screw extruder of the Buss type or of the double-screw type, provided with mixing elements.

Preferred devices are those having creep gradients of from 350 to 5000 s⁻¹, preferably 500 to 3000 s⁻¹.

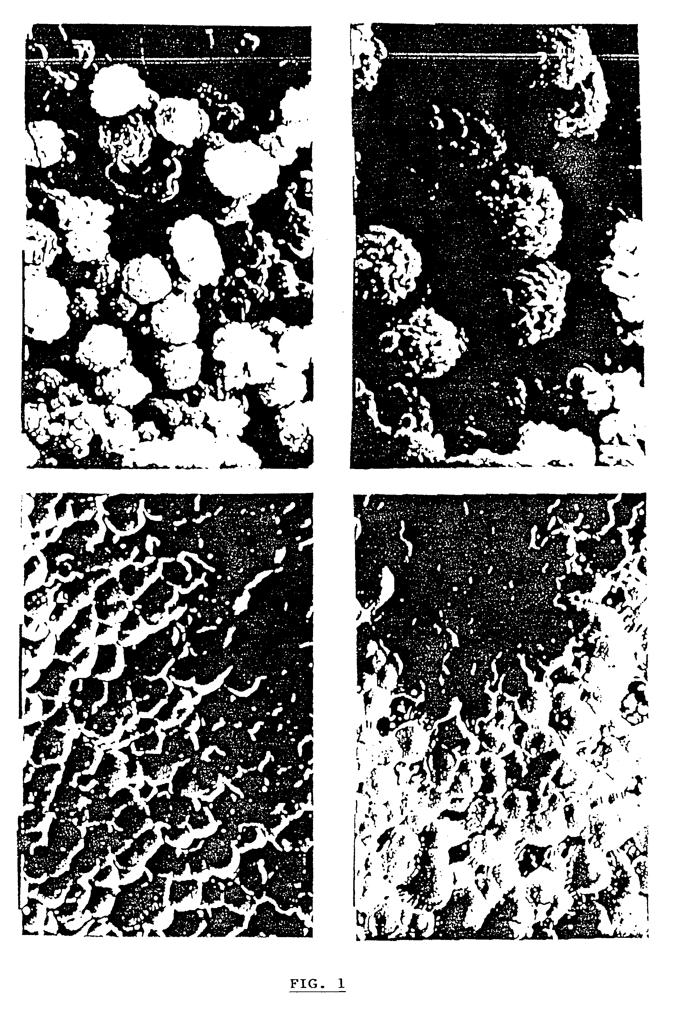

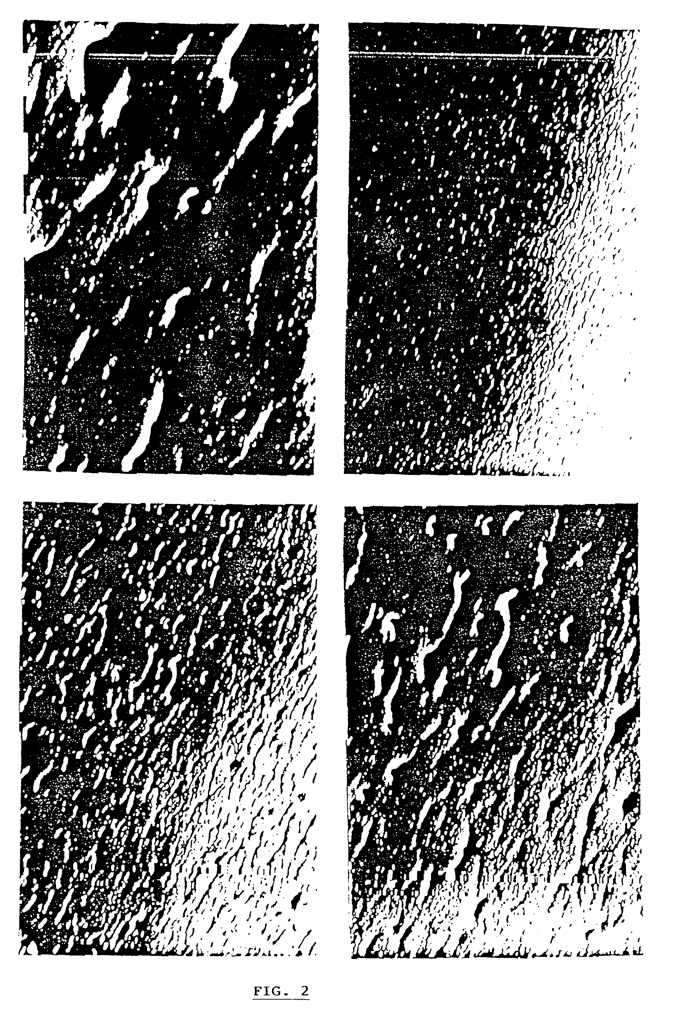

The particular morphology of the compositions of the present invention (Fig. 1) characterizes the type of crosslinking and differentiates these compositions from those which are obtained by crosslinking under static conditions. In fact, in the latter case the morphology of the compositions is geometrically less defined, and in general it is of the interpenetrating type (see Fig. 2) with a behaviour under heating similar to that of a crosslinked elastomer. That is also the reason why these compositions as such are so poorly processable.

The compositions of this invention are characterized by a high melt strength and an elastomeric behaviour of the melt itself in connection with low creep gradients, although they remain surprisingly processable.

The compositions of the present invention are particularly suitable for use in the manufacture of foamed materials.

For this purpose it is possible to work by incorporating a foaming agent into the crosslinked product, then extruding the mixture using a homogenizing single-screw extruder which shows and maintains up to the head a reduction decrease of clearance between throat and chambers, thereby allowing the expansion to occur at the outlet.

Alternatively, it is possible to work in an injection press having a profile of the homogenizing screw which keeps the mixture of the polypropylene composition and the foaming agent under pressure and using a mould provided with air breathers. In both cases the extruder temperature preferably ranges from 180 to 200°C.

According to another method, the foamed material can be obtained during the preparation of the crosslinked composition, by feeding into a double-screw extruder a mixture of not crosslinked polypropylene and co-agent, while introducing into the molten material both the crosslinking agent and the foaming agent at a distance from said feeding point equal to 2/3 of the extruder length and allowing the whole mixture to proceed along the extruder under conditions of reduced volume up to the outlet.

In this case, the temperature is generally kept at from 170 to 200°C.

The employable foaming agents can be of both chemical and physical type. In the first case their decomposition temperature should range from 170 to 220°C.

Examples of foaming agents of the chemical type which may be used are azodicarbonamides, sulfonylhydrazides, dinitropentamethylenetetramine, p-toluenesulfonylsemicarbazide, trihydrazine-triazine and generally all products used in the art for said purpose, having decomposition temperatures at least equal to the melting temperature of polypropylene.

As physical foaming agents all those known in the literature for said purpose can be used, for instance chlorofluorocarbons and aliphatic hydrocarbons containing a low number of carbon atoms (such as, for instance, propane, butane, pentane etc.).

The foamed materials thus obtained (and which are a further object of the present invention) comprise a mixture of from 3 to 75% by weight of crosslinked (preferably isotactic) polypropylene and of from 97 to 25% by weight of not crosslinked polypropylene having an intrinsic viscosity of from 0.5 to 1.3 dl/g, said mixture showing a MI of from 610 to 0.001 kg/10' (measured at 230°C and 2.16 kg). Said foamed materials are of the closed cell type and have a density of from 0.2 to 0.4 g/cm³.

### EXAMPLES 1 - 13

These examples illustrate the preparation of the compositions according to the invention, using crosslinking agents, co-agents and different polymers. Working conditions and characteristics of the obtained compositions are listed in Table 1.

The compositions were prepared by allowing the polypropylene to melt by heating it at 180°C in an inner mixer of the Brabender type (60 rpm) and then adding the co-agent and thereafter the crosslinking agent.

The compositions were continuously mixed at the above temperature for about 10 minutes, under a creep gradient of about 350 to 700 sec⁻¹.

After this period of time, active peroxide was no longer present in the compositions.

### EXAMPLES 14 AND 15

These examples illustrate the preparation of compositions according to the invention by extrusion.

To this end a double-screw extruder of the MARRIS type (L/D = 30, diameter = 33 mm) was employed, working at 150 rpm and at a temperature of from 180 to 230°C.

A mixture of polypropylene and crosslinking co-agent (obtained in a dry mixer) was introduced into the extruder, while adding the crosslinking agent at a distance from the introduction zone equal to 2/3 of the extruder length.

The creep gradient under which the mixture was extruded was about 2000 sec⁻¹ in example 15 and about 3000 sec⁻¹ in example 14.

The thus obtained product was then molded in an injection press (Negri and Bossi N60) working at 200°C, with the mold being kept at 40°C and under an injection pressure of 30%.

The crosslinking working conditions and the characteristics of the samples thus prepared are reported in Table 2.

Crosslinked compositions obtained as described above were further used for the preparation of foamed materials, either by extrusion or by press-injection according to the following modalities.

### Extrusion

The operation was carried out with a single screw Brabender exruder (L/D = 20, diameter = 20 mm, diameter of the head matrix = 2 mm) working at a temperature of 180 to 200°C along the body and of 150 to 190°C at the head, introducing a mixture prepared in a dry mixer and consisting of compositions of the above examples,crosslinked with 0.5% by weight of azodicarbonamide.

### Press-injection

The operation was carried out with a Negri and Bossi N60 press (temperature of the cylinder: 200°C; temperature of the mold equipped with breather channels: 40 to 50°C; injection pressure: 30 to 90%), using the same mixture with azodicarbonamide already used for the preparation by extrusion.

The characteristics of the foamed materials are reported in Table 2.

### EXAMPLE 16

This example relates to the manufacture of foamed materials according to the invention, concurrently with the preparation of the crosslinked composition.

To this end, a mixture of polypropylene (M.I. = 8) and difurfuralaldazine was fed into a double-screw extruder working at a temperature of 180 to 200°C along the body and of 150 to 190°C at the head under a creep gradient of about 2800 sec⁻¹, while introducing in the extruder, at a distance from said feeding point equal to 2/3 of the extruder length, the peroxide and the foaming agent (azodicarbonamide).

Table 3 lists the amounts of reactants and the characteristics of the foamed product.

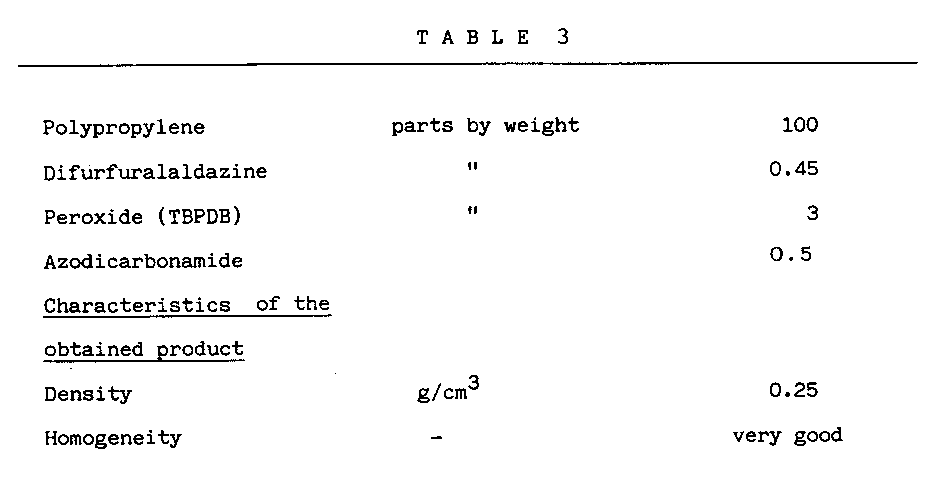

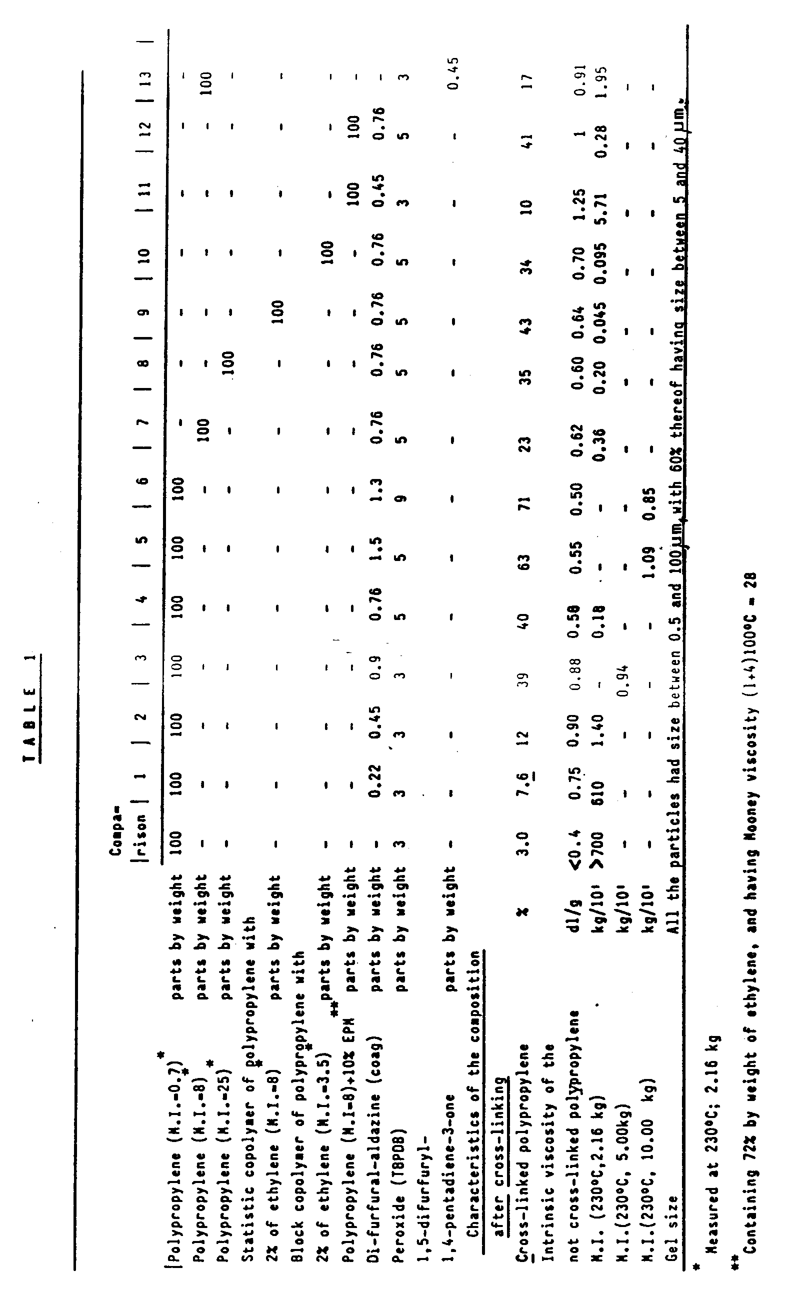

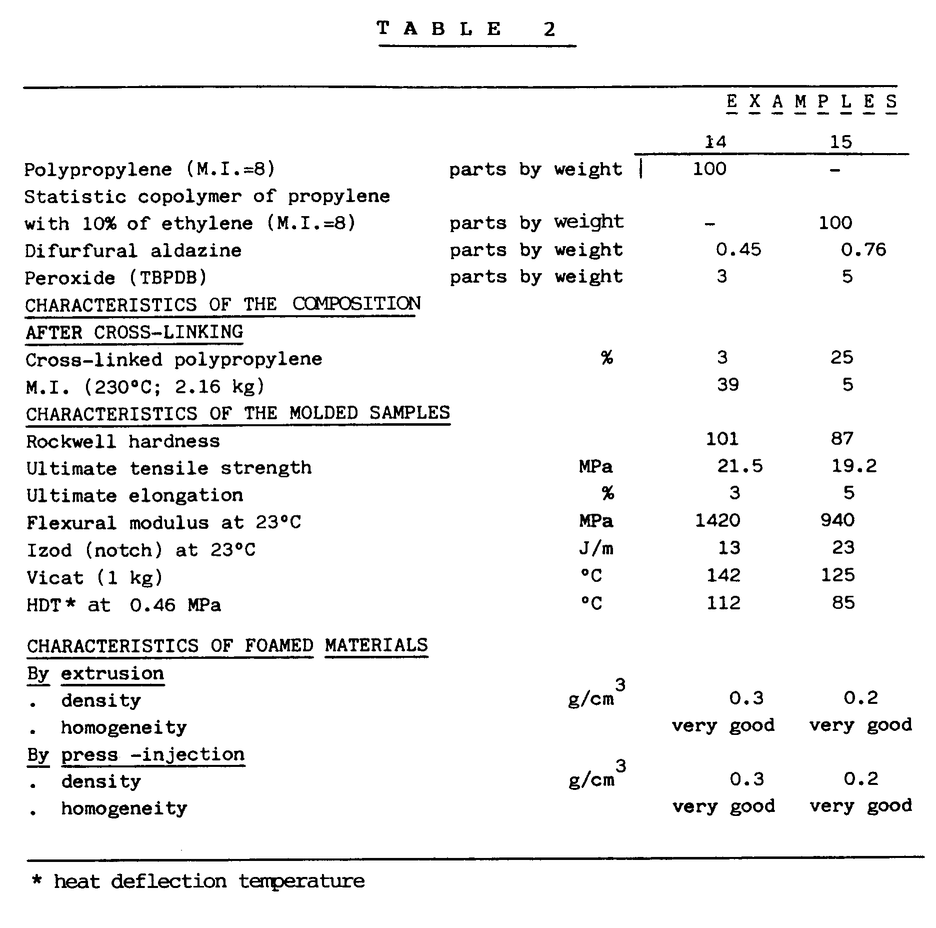

## Claims

1. Compositions comprising a mixture of:
(a) from 3 to 75% by weight of crosslinked polypropylene, insoluble in xylene at 135°C;
(b) from 97 to 25% by weight of not crosslinked polypropylene (soluble in xylene at 135°C and having an intrinsic viscosity in tetrahydronaphthalene at 135°C of from 0.5 to 1.3 dl/g,
said mixture having a melt index (M.I.), measured at 230°C and 2.16 kg, of from 0.001 to 610 kg/10', the crosslinked polypropylene being dispersed in the not crosslinked polypropylene and being present therein in the form of a gel having a particle size of from 0.5 to 100 µm.

2. Compositions according to claim 1 wherein the not cross-linked polypropylene has an intrinsic viscosity in tetrahydronaphthalene at 135°C of from 0.9 to 1.3 dl/g.

3. Compositions according to any one of claims 1 and 2, wherein the crosslinked polypropylene is present in the form of a gel having a particle size of from 0.5 to 10, and particularly 0.5 to 5 µm.

4. Compositions according to any one of claims 1 to 3, wherein the mixture has a M.I. at 230°C and 2.16 kg of from 0.01 to 80 kg/10'.

5. Compositions according to any one of claims 1 to 4, wherein the crosslinked polypropylene in the mixture accounts for 7 to 40% by weight and the not crosslinked polypropylene accounts for 93 to 60% by weight.

6. Compositions according to any one of claims 1 to 5, wherein the polypropylene is a copolymer containing up to 10% by weight of olefin different from propylene.

7. Process for the preparation of compositions according to any one of claims 1 to 6, wherein a mixture comprising:
a) a homopolymer or a copolymer of propylene with other copolymerizable olefinic monomers in amounts of up to 10% by weight
b) a peroxidic crosslinking agent for the polypropylene and
c) from 5 to 500% by weight, based on the peroxidic crosslinking agent, of a compound of one of the general formulae (I) and (II): 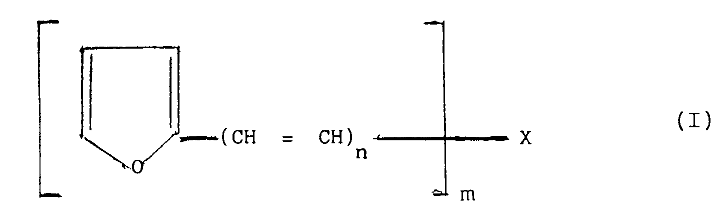 wherein X is selected from CHO, COOH, CN, CONH₂, NO₂, -COOCO-, COOR, -CO-, CH₂COCH₂COOR and CH(COOR)₂ radicals wherein R is C₆-C₈ aryl or C₁-C₄ alkyl;
n = 1 or 2; and
m = an integer corresponding to the free valence of X; 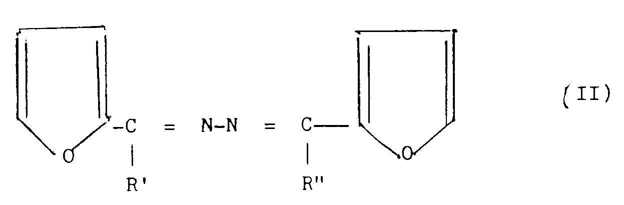 wherein R' and R'', the same or different from each other, are selected from hydrogen, C₁-C₄ alkyl and C₅-C₈, preferably C₆-C₈ cycloalkyl groups;
is subjected to crosslinking under shear and at a temperature of 150 to 240°C which is sufficient to melt the polypropylene and at which the crosslinking of polypropylene occurs, preferably in the presence of a foaming agent.

8. Process according to claim 7, wherein the mixture is crosslinked under a creep gradient of from 350 to 5000 sec⁻¹, particularly 500 to 3000 sec⁻¹.

9. Process according to any one of claims 7 and 8, wherein the compound of general formula (I) or (II) is present in an amount of from 7 to 150% by weight, based on the peroxidic crosslinking agent.

10. Process according to any one of claims 7 to 9, wherein the polypropylene is an isotactic polypropylene.

11. Process according to any one of claims 7 to 10, wherein the mixture contains up to 10% by weight of an ethylene/propylene rubber.

12. Foamed materials of the closed cell type, having a density of from 0.2 to 0.4 g/cm³ and comprising a mixture of:
a) 3 to 75% by weight of crosslinked polypropylene, insoluble in xylene at 135°C;
b) 97 to 25% by weight of not crosslinked polypropylene soluble in xylene at 135°C and having an intrinsic viscosity in tetrahydronaphthalene at 135°C of from 0.5 to 1.3 dl/g;
said mixture having a M.I. (at 230°C, 2.16 kg) of from 0.001 to 610 kg/10'.

## Patentansprüche

1. Zusammensetzungen umfassend eine Mischung aus:
(a) 3 bis 75 Gew.-% vernetztem Polypropylen, welches bei 135°C in Xylol unlöslich ist;
(b) 97 bis 25 Gew.-% unvernetztem Polypropylen, welches bei 135°C in Xylol löslich ist und bei 135°C in Tetrahydronaphthalin eine innere Viskosität von 0,5 bis 1,3 dl/g aufweist,
wobei diese Mischung einen bei 230°C und 2,16 kg gemessenen Schmelzindex (M.I.) von 0,001 bis 610 kg/10' aufweist, und das vernetzte Polypropylen im unvernetzten Polypropylen dispergiert ist und darin in Form eines Gels mit einer Teilchengröße von 0,5 bis 100 µm vorliegt.

2. Zusammensetzungen gemäß Anspruch 1, worin das unvernetzte Polypropylen bei 135°C in Tetrahydronaphthalin eine innere Viskosität von 0,9 bis 1,3 dl/g aufweist.

3. Zusammensetzungen gemäß irgendeinem der Ansprüche 1 und 2, worin das vernetzte Polypropylen in Form eines Gels mit einer Teilchengröße von 0,5 bis 10 µm, insbesondere von 0,5 bis 5 µm, vorliegt.

4. Zusammensetzungen gemäß irgendeinem der Ansprüche 1 bis 3, worin die Mischung bei 230°C und 2,16 kg einen Schmelzindex (M.I.) von 0,01 bis 80 kg/10' aufweist.

5. Zusammensetzungen gemäß irgendeinem der Ansprüche 1 bis 4, worin das vernetzte Polypropylen in der Mischung 7 bis 40 Gew.-% und das unvernetzte Polypropylen 93 bis 60 Gew.-% ausmacht.

6. Zusammensetzungen gemäß irgendeinem der Ansprüche 1 bis 5, worin das Polypropylen ein Copolymer ist, welches bis zu 10 Gew.-% eines von Propylen verschiedenen Olefins enthält.

7. Verfahren zur Herstellung von Zusammensetzungen gemäß irgendeinem der Ansprüche 1 bis 6, worin eine Mischung, umfassend:
a) ein Homopolymer oder Copolymer des Propylens mit anderen copolymerisierbaren olefinischen Monomeren in Mengen von bis zu 10 Gew.-%,
b) ein peroxidisches Vernetzungsmittel für das Polypropylen, und
c) 5 bis 500 Gew.-%, bezogen auf das peroxidische Vernetzungsmittel, einer Verbindung einer der allgemeinen Formeln (I) und (II): 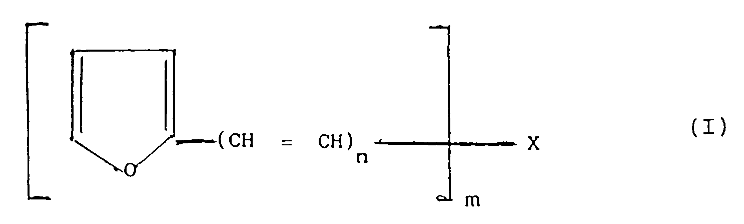 worin X ausgewählt ist aus CHO, COOH, CN, CONH₂, NO₂, -COOCO-, COOR, -CO-, CH₂COCH₂COOR und CH(COOR)₂ -Radikalen, worin R C₆-C₈-Aryl oder C₁-C₄-Alkyl ist;
n = 1 oder 2 ist; und
m = eine ganze Zahl ist, welche der freien Valenz von entspricht; 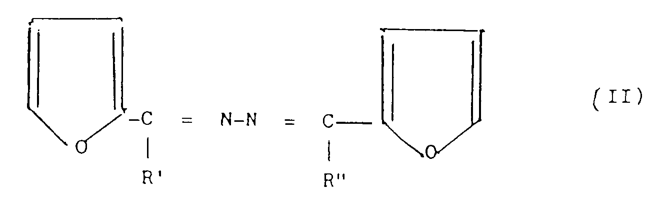 worin R' und R'', welche gleich oder voneinander verschieden sind, ausgewählt sind aus Wasserstoff, C₁-C₄-Alkylgruppen und C₅-C₈-, vorzugsweise C₆-C₈-, Cycloalkylgruppen;
unter Scherung bei einer Temperatur zwischen 150°C und 240°C, welche zum Schmelzen des Polypropylens ausreicht und bei der die Vernetzung des Polypropylens stattfindet, einer Vernetzung unterworfen wird, vorzugsweise in Gegenwart eines Treibmittels.

8. Verfahren gemäß Anspruch 7, worin die Mischung bei einem Kriechgradienten von 350 bis 5000 sek⁻¹, insbesondere bei 500 bis 3000 sek⁻¹, vernetzt wird.

9. Verfahren gemäß irgendeinem der Ansprüche 7 und 8, worin die Verbindung der allgemeinen Formel (I) oder (II) in einer Menge von 7 bis 150 Gew.-%, bezogen auf das peroxidische Vernetzungsmittel, vorliegt.

10. Verfahren gemäß irgendeinem der Ansprüche 7 bis 9, worin das Polypropylen ein isotaktisches Polypropylen ist.

11. Verfahren gemäß irgendeinem der Ansprüche 7 bis 10, worin die Mischung bis zu 10 Gew.-% eines Ethylen/Propylen-Kautschuks enthält.

12. Schaumstoffe des geschlossenzelligen Typs, welche eine Dichte von 0,2 bis 0,4 g/cm³ aufweisen und eine Mischung aus:
a) 3 bis 75 Gew.-% vernetztem Polypropylen, welches bei 135°C in Xylol unlöslich ist;
b) 97 bis 25 Gew.-% unvernetztem Polypropylen, welches bei 135°C in Xylol löslich ist und bei 135°C in Tetrahydronaphthalin eine innere Viskosität von 0,5 bis 1,3 dl/g aufweist;
wobei diese Mischung einen Schmelzindex (M.I.) (bei 230°C, 2,16 kg) von 0,001 bis 610 kg/10' aufweist.

## Revendications

1. Compositions comprenant un mélange:
(a) de 3 à 75% en poids de polypropylène insoluble dans le xylène à 135°C;
(b) de 97 à 25% en poids de polypropylène non réticulé (soluble dans le xylène à 135°C et présentant une viscosité intrinsèque dans le tétrahydronaphtalène à 135°C de 0,5 à 1,3 dl/g,
ledit mélange présentant un indice de fusion (M.I.) mesuré à 230°C et 2,16 kg, compris entre 0,001 et 610 kg/10', le polypropylène réticulé étant dispersé dans le polypropylène non réticulé et y étant présent sous la forme d'un gel dont les particules ont des dimensions de 0,5 à 100 µm.

2. Compositions selon la revendication 1, dans lesquelles le polypropylène non réticulé présente une viscosité intrinsèque dans le tétrahydronaphatalène à 135°C comprise entre 0,9 et 1,3 dl/g.

3. Compositions selon l'une quelconque des revendications 1 et 2, dans lesquelles le polypropylène réticulé est présent sous la forme d'un gel dont les particules ont une dimension de 0,5 à 10 µm, et en particulier de 0,5 à 5 µm.

4. Compositions selon l'une quelconque des revendications 1 à 3, dans lesquelles le mélange présente un M.I. à 230°C et 2,16 kg, compris entre 0,01 et 80 kg/10'.

5. Compositions selon l'une quelconque des revendications 1 à 4, dans lesquelles le polypropylène réticulé dans le mélange représente de 7 à 40% en poids et le polypropylène non réticulé représente de 93 à 60% en poids.

6. Compositions selon l'une quelconque des revendications 1 à 5, dans lesquelles le polypropylène est un copolymère contenant jusqu'à 10% en poids d'une oléfine autre que le propylène.

7. Procédé de préparation de compositions selon l'une quelconque des revendications 1 à 6, dans lequel un mélange comprenant:
a) un homopolymère ou un copolymère de propylène avec d'autres monomères oléfiniques copolymérisables en une proportion atteignant jusqu'à 10% en poids;
b) un agent de réticulation peroxydique pour le polypropylène; et
c) de 5 à 500% en poids par rapport au poids de l'agent de réticulation peroxydique, d'un dérivé répondant à l'une des formules générales (I) et (II): 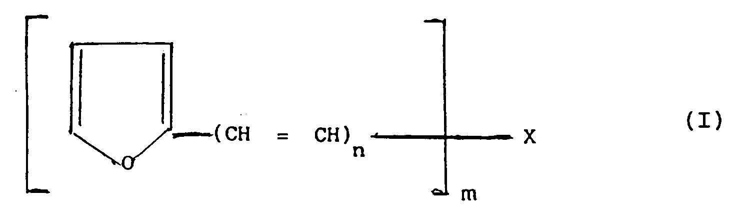 dans laquelle:
X est choisi parmi les radicaux CHO, COOH, CONH₂, CN, NO₂, -COOCO-, COOR, -CO-, CH₂COCH₂COOR et -CH(COOR)₂ dans lesquels R est un radical aryle en C₆ à C₈ ou alkyle en C₁ à C₄;
n est égal à 1 ou 2; et
m est un entier correspondant à la valence libre de X;
ou 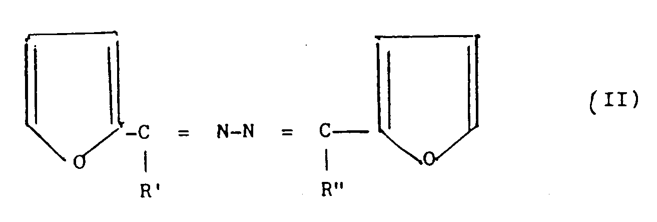 dans laquelle:
R' et R'', identiques ou différents l'un de l'autre, sont choisis parmi l'atome d'hydrogène, les radicaux alkyles en C₁ à C₄ et les groupes cycloalkyles en C₅ à C₈, de préférence en C₆ à C₈;
est soumis à une réticulation sous cisaillement et à une température de 150 à 240°C, suffisante pour provoquer la fusion du polypropylène et à laquelle se produit la réticulation du polypropylène, de préférence en présence d'un agent d'expansion.

8. Le procédé selon la revendication 7, dans lequel le mélange est réticulé sous un gradient de fluage de 350 à 5000 s⁻¹, en particulier de 500 à 3000 s⁻¹.

9. Le procédé selon l'une quelconque des revendications 7 et 8, dans lequel le dérivé de formule générale (I) ou (II) est présent en une proportion de 7 à 150% par rapport au poids de l'agent de réticulation peroxydique.

10. Le procédé selon l'une quelconque des revendications 7 à 9, dans lequel le polypropylène est un polypropylène isotactique.

11. Le procédé selon l'une quelconque des revendications 7 à 10, dans lequel le mélange contient jusqu'à 10% en poids d'un caoutchouc éthylène-propylène.

12. Matériaux expansés du type à cellule fermée dont la densité est de 0,2 à 0,4 g/cm³ et comprenant un mélange de:
a) 3 à 75% en poids de polypropylène réticulé, insoluble dans le xylène à 135°C;
b) 97 à 25% en poids de polypropylène non réticulé, soluble dans le xylène à 135°C et dont la viscosité intrinsèque dans le tétrahydronaphtalène à 135°C est comprise entre 0,5 et 1,3 dl/g;
ledit mélange présentant un M.I. (à 230°C, 2,16 kg) compris entre 0,001 et 610 kg/10'.
